# EUROPEAN PATENT APPLICATION

(11) **EP 4 002 391 A1**
(43) Date of publication of application: **25.05.2022**
(21) Application number: 19932320.5
(22) Date of filing: 04.12.2019
(51) Int. Cl.: G21D 3/06

(54) **REMOTE SHUTDOWN STATION SYSTEM OF NUCLEAR POWER PLANT, AND METHOD FOR PUTTING SAME INTO USE**

(30) Priority: 14.06.2019 CN 201910514284
(71) Applicant: China Nuclear Power Engineering Co., Ltd., Shenzhen, Guangdong 518124 (CN); China Nuclear Power Design Company Ltd. (Shenzhen), Shenzhen, Guangdong 518100 (CN); China General Nuclear Power Corporation, Shenzhen, Guangdong 518026 (CN); CGN Power Co., Ltd., Shenzen, Guangdong 518026 (CN)
(72) Inventor: CHENG, Bo, Shenzhen, Guangdong 518100 (CN); MEI, Shibai, Shenzhen, Guangdong 518100 (CN); WANG, Yan, Shenzhen, Guangdong 518100 (CN); ZOU, Jie, Shenzhen, Guangdong 518100 (CN); ZHANG, Gang, Shenzhen, Guangdong 518100 (CN); YU, Zhenglong, Shenzhen, Guangdong 518100 (CN); ZHOU, Yichao, Shenzhen, Guangdong 518100 (CN); MAO, Ting, Shenzhen, Guangdong 518100 (CN); ZHANG, Xuegang, Shenzhen, Guangdong 518100 (CN); WU, Yiqian, Shenzhen, Guangdong 518100 (CN); HUANG, Weijun, Shenzhen, Guangdong 518100 (CN); ZHANG, Jianbo, Shenzhen, Guangdong 518100 (CN); XU, Xiaomei, Shenzhen, Guangdong 518100 (CN); LV, Zhihong, Shenzhen, Guangdong 518100 (CN)
(74) Representative: Greaves Brewster LLP
(86) International application number: PCT/CN2019/123042
(87) International publication number: WO 2020/248540

(57) **Abstract**

The present invention provides a remote shutdown station system of a nuclear power plant and method for putting same into use. The remote shutdown station system includes a remote shutdown station (10), an operator workstation module (100) arranged in the remote shutdown station (10), and switching unit assembly (200) arranged inside and outside the remote shutdown station (10), wherein the operator workstation module (100) is used for receiving and processing, when a main control room is not habitable, monitoring information identical to that of the main control room; the switching unit assembly (200) are connected to a logic control cabinet and are configured for sending switching instructions according to different states of the nuclear power plant; the logic control cabinet is in communication connection with the main control room and the operator workstation module (100), and is configured for receiving the switching instructions, performing logical processing on the switching instructions, and then switching to the main control room or the operator workstation module (100) to receive and process monitoring information in a DCS monitoring network of the nuclear power plant. According to the present invention, the problem that some process system logic has to be forced to be automatic when switching to the remote shutdown station system due to limited monitoring means is solved, thereby enlarging the monitoring range of a monitoring function.

## Description

### FIELD OF THE INVENTION

The present invention generally relates to nuclear power plants and, more particularly, relates to a remote shutdown station system of nuclear power plant and method for putting same into use.

### BACKGROUND OF THE INVENTION

The remote shutdown station is the only centralized backup monitoring and control place when the main control room is uninhabitable. The remote shutdown station plays a very important role in the operation of the nuclear power plant, plays a key role in maintaining the safety of the nuclear power plant and reducing the probability of nuclear accidents. When the main control room of the nuclear power plant is uninhabitable, if there is no remote shutdown station or the remote shutdown station is uninhabitable when it is required to be put into use, the nuclear power plant will be in an unsupervised and uncontrollable state, which will endanger nuclear safety and public environment and cause irreversible social impact. If the scheme of the remote shutdown station is not sufficient and reliable, it will also limit the means to maintain the safe state of the nuclear power plant, which may affect the safety of the nuclear power plant. The remote shutdown station plays a important role in the operation of the nuclear power plant. Therefore, the functional objects, safety principles, human factors engineering principles, operation organization, human-machine interface, space and configuration, switching and isolation with the main control room of the remote shutdown station, environmental conditions need to be fully considered and designed.

In the prior art, one of the technical solutions provides a remote shutdown station that uses conventional equipments for monitoring and control. Due to the equipment scale of the hardware panel, the remote shutdown station is a small space isolated by iron fences. The human comfort of the environment and the monitoring functions are limited, and the rest of the required functions can only be completed by in-situ operation or switching the process system to automatic logic. There is no reactor shutdown button in the remote shutdown station to provide fast reactor shutdown function, which cannot fully meet the requirements of regulatory standards. Without an independent closed space, it is impossible to create a comfortable human factor environment and improve the human factor performance of operators.

Another technical solution in the prior art provides a remote shutdown station using DCS technology. The technical defects of this technical solution mainly include: there are only two operator workstations which are not completely matched with the operating organization. There are no emergency shutdown functions to satisfy the requirements of laws and regulations. The room is a space separated by the rear wall, and the rear wall is located on the seismic expansion joint of the factory building, which is not conducive to the stable placement of the equipments. Fire monitoring cannot be performed. The switching logic of the main control room and the remote shutdown station cannot distinguish the workstation terminals of the main control room and the remote shutdown station, which increases the risk probability of false commands sent out by the operator workstation in the main control room. The cable path of the remote shutdown station is not completely independent from that of the main control room, which does not meet the requirements of regulatory standards. The room is on the convenient path for inspection and can be freely entered and exited, and unrelated personnel may frequently enter and exit the room, which may affect the safety of the equipments of the remote shutdown station.

In view of the foregoing, what is needed, therefore, is to provide a remote shutdown station system of nuclear power plant and method for putting same into use, to improve the human performance and safety performance of nuclear power plant operation and meet the requirements of remote shutdown of nuclear power plant.

### SUMMARY OF THE INVENTION

Aiming at the insufficient reliability and safety of the remote shutdown station in the prior art, which leads to increase of the safe operation risk of the nuclear power plant, the present invention provides a remote shutdown station system of nuclear power plant and method for putting same into use.

According to one embdoment of the present invention, a remote shutdown station system of a nuclear power plant includes a remote shutdown station arranged on an unconventional inspection and evacuation path of a safety workshop, an operator workstation module arranged inside the remote shutdown station, and switching unit assembly arranged inside and outside the remote shutdown station;
wherein the operator workstation module is connected to a DCS monitoring network of the nuclear power plant and used for receiving and processing, when a main control room is not habitable, monitoring information identical to that of the main control room;
the switching unit assembly are connected to a logic control cabinet and are configured for sending switching instructions according to different states of the nuclear power plant, the logic control cabinet is in communication connection with the main control room and the operator workstation module, and is configured for receiving the switching instructions, performing logical processing on the switching instructions, and then switching to the main control room or the operator workstation module to receive and process monitoring information in the DCS monitoring network of the nuclear power plant.

According to one aspect of the present invention, the switching unit assembly includes a first switching unit, a second switching unit and a third switching unit. The first switching unit, the second switching unit and the third switching unit are connected with the logic control cabinet, and the logic control cabinet is used for:
switching to the operator workstation module to receive and process the monitoring information when the nuclear power plant is in an abnormal state, the main control room is not habitable, and at least two switching units send out instructions to switch to the operator workstation module, and the main control room is automatically locked;
switching to the main control room to receive and process monitoring information, when the nuclear power plant is in normal state and at least two switching units send out an instruction to switch to the main control room, and the operator workstation module is automatically locked.

According to one aspect of the present invention, the first switching unit is arranged inside the remote shutdown station, the second switching unit is arranged outside the remote shutdown station, and the third switching unit is arranged outside the main control room, to prevent the three switching units from failing simultaneously due to an accident in a same area.

According to one aspect of the present invention, the operator workstation module includes a first operator workstation, a second operator workstation and a crew chief workstation, and the crew chief workstation is used for receiving the monitoring information identical to that of the operator workstation in the main control room, and monitoring the monitoring information; the crew chief workstation can also be used to authorize the first operator workstation and the second operator workstation; the first operator workstation and the second operator workstation are used for receiving monitoring information identical to that of the main control room operator workstation and processing part of the monitoring information, and processing all the monitoring information after authorization from the crew chief workstation.

According to one asepct of the present invention, the first operator workstation, the second operator workstation and the crew chief workstation each comprises four widescreen displays and four safety-level operation terminals, the four widescreen displays are used for receiving and displaying the monitoring information, and transmitting safety-level monitoring information in the monitoring information to the four safety-level operation terminals, the four safety-level operation terminals are used for receiving and processing the safety-level monitoring information, and the four widescreen displays (141) and the four safety-level operation terminal each has a man-machine interface identical to that of the operator workstation in the main control room.

According to one aspect of the present invention, the remote shutdown station system further includes an automatic fire alarm system graphic workstation module arranged inside the remote shutdown station, the automatic fire alarm system graphic workstation module includes an automatic fire alarm control unit and a graphic workstation unit, and an input end of the automatic fire alarm control unit is connected to fire detectors arranged at various positions in the nuclear power plant for receiving fire information monitored by the fire detectors; an output end of the automatic fire alarm control unit is respectively connected with the graphic workstation unit and in-situ simulation panels set up at various places in the nuclear power plant, to transmit the fire information to the graphic workstation unit and display the fire information in graphic form for the operator to understand the fire situation, and to transmit the fire information to the in-situ simulation panels synchronously, so that the in-situ simulation panels can issue sound and light alarm information to alert the operator.

According to one aspect of the present invention, the remote shutdown station further includes a first door and a second door for allowing authorized operators to enter the remote shutdown station. The first door is arranged on the side close to the automatic fire alarm system graphic workstation module, and the second door is arranged on the side close to the operator workstation module to improve safety of the remote shutdown station.

According to one aspect of the present invention, the remote shutdown station system further includes a first communication device, a second communication device, a third communication device and a fourth communication device arranged inside the remote shutdown station. The first communication device and the third communication device are arranged on the left side of the first operator workstation and the crew chief workstation respectively, the second communication device is arranged on the right side of the second operator workstation, and the fourth communication device is arranged between the first operator workstation and the second operator workstation for the operator to communicate with the outside.

According to one aspect of the present invention, the remote shutdown station system further includes a printer module arranged inside the remote shutdown station. The printer module is connected to the operator workstation module to print the monitoring information in the operator workstation module.

According to one aspect of the present invention, the remote shutdown station system further includes an emergency shutdown module arranged inside the remote shutdown station. The emergency shutdown module is connected to a shutdown breaker for emergency shutdown.

According to one aspect of the present invention, the remote shutdown station system has a cable path independent from that of the main control room.

According to one aspect of the present invention, a background noise of the remote shutdown station does not exceed 65dB. Under normal lighting conditions, an average illuminance of the remote shutdown station is no less than 300Lux. Under single-row normal lighting failure condition, illuminance of a core operation area is no less than 200Lux.

According to one aspect of the present invention, the cable entry manner of equipment inside the remote shutdown station is bottom cable entry, to improve aesthetics and comfort of the remote shutdown station.

According to a second embodiment of the present invention, a method for putting a remote shutdown station system of a nuclear power plant into use includes the steps of:
1) quickly pressing an emergency shutdown button and a unit shutdown button in a main control room when the main control room is not habitable in abnormal state of the nuclear power plant, to keep the unit in a relatively safe state;
2) operators of the main control room evacuating the main control room to a remote shutdown station, switching a switching unit assembly to a remote shutdown station mode in an evacuation path and the remote shutdown station, and blocking DCS signal of the main control room;
3) in the remote shutdown station, operators logging in to a first operator workstation and a second operator workstation with operator authority, logging in to a crew chief workstation with crew chief authority, and switching safety-level operation terminals of the first operator workstation and the second operator workstation to operation mode through switch thereof; and
4) using the workstation to perform power plant monitoring and control functions, to make the units retreat and stabilize in refueling cold shutdown state.

According to one aspect of the present invention, the switching unit assembly includes a first switching unit, a second switching unit and a third switching unit. The first switching unit is arranged inside the remote shutdown station, and the second switching unit and the third switching unit are arranged outside the remote shutdown station respectively; and in step 2), at least two of the three switching units are switched to the remote shutdown station mode to block the DCS signal of the main control room.

According to one aspect of the present invention, the remote shutdown station system includes a first door and a second door opposite to each other. The second switching unit is arranged on a wall outside the first door, and the third switching unit is set on a wall outside the second door.

Aiming at the insufficient reliability and safety of the remote shutdown station in the prior art, which leads to increase of the safe operation risk of the nuclear power plant, the present invention provides a remote shutdown station system of nuclear power plant and method for putting same into use adopting digital control system technology and equipment. The remote shutdown station system receives and processes the monitoring information identical to that of the operator workstation in the main control room, which enhances the monitoring function and monitoring range of the remote shutdown station, reduces the dependence on in-situ operation, solves the problem that some process system logic has to be forced to be automatic when switching to the remote shutdown station system due to limited monitoring means is solved. The crew chief workstation has been introduced to meet the requirements of the operational organization and maintenance mode. The crew chief workstation is located behind the operator workstation, and the crew chief can control the monitoring situation of the power plant. A hardware shutdown module is designed in the remote shutdown station system, which can perform the rapid reactor shutdown function. The three switching units are placed in different areas, which can effectively reduce the probability of common-cause failure of the switching switch. An access control is designed in the remote shutdown station system, which effectively prevents unauthorized personnel from entering the remote shutdown station and affects the safety of the remote shutdown station and the nuclear power plant. The access control adopts the design scheme that the access control is invalid in the case of power failure, to avoid the situation of being unable to enter the remote shutdown station due to power failure. The present invention designs communication units to provide means and functions for communicating with the outside. The present invention also provides an automatic fire alarm system graphic workstation to meet the fire monitoring requirements. The present invention also designs that the main control room is automatically locked when the switching command is executed, which effectively reduces the probability of the main control room sending out false commands during the period of non-habitability, thereby affecting the safety of the power plant. The equipment cables in the remote shutdown station system adopt the manner of bottom entry, which effectively improves the aesthetics and comfort of the room.

### BRIEF DESCRIPTION OF THE DRAWINGS

Fig. 1 is a schematic block diagram of a remote shutdown station system of a nuclear power plant according to a first embodiment of the present invention;
Fig. 2 is a detailed structural schematic diagram of the remote shutdown station system of a nuclear power plant according to the first embodiment of the present invention;
Fig. 3 is a block diagram of an operator workstation module of a remote shutdown station system of a nuclear power plant according to the first embodiment of the present invention;
Fig.4 is a schematic block diagram of an automatic fire alarm system graphic workstation module of a remote shutdown station system of a remote shutdown station system of a nuclear power plant according to the first embodiment of the present invention;
Fig.5 is a schematic diagram of a cable path of a remote shutdown station system of a nuclear power plant according to the first embodiment of the present invention;
Fig. 6 is a flowchart of a method for setting up a remote shutdown station of a nuclear power plant according to a second embodiment of the present invention; and
Fig. 7 is a schematic diagram of a detailed structure of a remote shutdown station system of a nuclear power plant according to a third embodiment of the present invention.

### DETAILED DESCRIPTION OF THE INVENTION

Aiming at the insufficient reliability and safety of the remote shutdown station in the prior art, which leads to increase of the safe operation risk of the nuclear power plant, the present invention provides a remote shutdown station system of nuclear power plant.

The remote shutdown station system receives and processes the monitoring information identical to that of the operator workstation in the main control room, which enhances the monitoring function and monitoring range of the remote shutdown station, reduces the dependence on in-situ operation, solves the problem that some process system logic has to be forced to be automatic when switching to the remote shutdown station system due to limited monitoring means is solved. The crew chief workstation has been introduced to meet the requirements of the operational organization and maintenance mode. The crew chief workstation is located behind the operator workstation, and the crew chief can control the monitoring situation of the power plant. A hardware shutdown module is designed in the remote shutdown station system, which can perform the rapid reactor shutdown function. The three switching units are placed in different areas, which can effectively reduce the probability of common-cause failure of the switching switch. The present invention also provides an automatic fire alarm system graphic workstation to meet the fire monitoring requirements. The present invention also designs that the main control room is automatically locked when the switching command is executed, which effectively reduces the probability of the main control room sending out false commands during the period of non-habitability, thereby affecting the safety of the power plant. In order to make the objects, technical solutions and advantages of the present invention clearer, the embodiments of the present invention will now be further described in detail below with reference to the accompanying drawings.

### First Embodiment

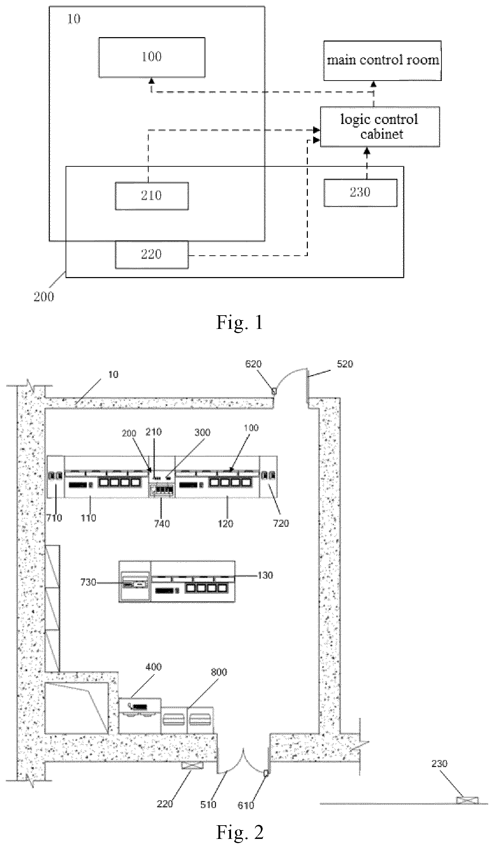

Referring to Fig. 1, the present invention provides a remote shutdown station system of a nuclear power plant including a remote shutdown station 10, an operator workstation module 100 arranged in the remote shutdown station 10, and switching unit assembly 200 arranged inside and outside the remote shutdown station 10.

According to the present invention, the remote shutdown station 10 is arranged on an unconventional inspection and evacuation path of the safety workshop, to prevent irrelevant personnel from entering and exiting the remote shutdown station 10, thereby ensuring the safe operation of the remote shutdown system of the nuclear power plant. The operator workstation module 100 is connected to the DCS monitoring network of the nuclear power plant, and is used to receive and process the monitoring information identical to that of the main control room when the main control room is not habitable, to enhance the monitoring function and monitoring range of the remote shutdown station system of the nuclear power plant, reduce the dependence on in-situ operation, and solve the problem that some process system logic has to be forced to be automatic when switching to the remote shutdown station system due to limited monitoring means. The switching unit assembly 200 is connected with a logic control cabinet, and is used for sending switching instructions to the logic control cabinet according to different nuclear power plant states. The logic control cabinet is communication connected with the main control room and the operator workstation module 100 respectively for switching to the main control room or operator workstation module 100 accordign to the switching instructions, to receive and process monitoring information within the DCS monitoring network of the nuclear power plant.

Referring to Fig. 1, the switching unit assembly 200 includes a first switching unit 210, a second switching unit 220 and a third switching unit 230. The first switching unit 210, the second switching unit 220 and the third switching unit 230 are connected to the logic control cabinet, and are used to send switching instructions to the logic control cabinet according to the state of the nuclear power plant. The logic control cabinet is respectively connected to the operator workstation module 100 and the main control room. The logic control cabinet is used to switch to the operator workstation module 100 to receive and process monitoring information when at least two switching units send out an instruction to switch to the operator workstation module 100 in the abnormal state of the nuclear power plant and the main control room is not habitable. At the same time, the main control room is automatically locked. The logic control cabinet is also used to switch to the main control room to receive and process monitoring information when at least two switching units send out an instruction to switch to the main control room under the normal state of the nuclear power plant. At the same time, the operator workstation module 100 is automatically locked. It should be noted that when switching to the operator workstation module 100, the main control room is locked and cannot process the monitoring information. The main control room is in the browsing mode and cannot be forced to log in with the operation authority and then execute the control function, which effectively reduces the probability that the main control room sending out false orders during the non-residential periods to affect the safety of the nuclear plant. However, it should be noted that, when the main control room is automatically locked, the reactor shutdown button in the main control room can work normally, which is used to carry out emergency shutdown and unit shutdown in emergency situations, ensuring that the main control room still can carry out reactor shutdown and unit shutdown, thereby ensuring the safety of nuclear power plant operation.

Referring to Fig. 2, the first switching unit 210 is arranged in the remote shutdown station 10, close to the operator workstation module 100, so as to facilitate the operator to switch. The second switching unit 220 is arranged on the outer wall outside the remote shutdown station 10. The third switching unit 230 is arranged outside the main control room to avoid the failure of the three switching units due to an accident in the same area, thereby effectively reducing the probability of common-cause failure of the switching switch.

Referring to Fig. 2, the operator workstation module 100 includes a first operator workstation 110, a second operator workstation 120 and a crew chief workstation 130, and the crew chief workstation 130 is used to receive the monitoring information identical to that of the main control room operator workstation, and monitor the monitoring information. The crew chief workstation 130 can also be used to authorize the first operator workstation 110 and the second operator workstation 120. The first operator workstation 110 and the second operator workstation 120 are used to receive the monitoring information identical to that of the operator workstation in the main control room and process part of the monitoring information, and process all the monitoring information after authorization by the crew chief workstation 130. Specifically: the first operator workstation 110 and the second operator workstation 120 are located in the front row and are in control mode, which are used to issue operating instructions to field devices. The crew chief workstation 130 is located in the rear row and is in monitoring mode, which is conducive to monitoring the status of the entire power plant to meet the requirements of the operation organization and operation and maintenance mode.

The remote shutdown station system also includes an automatic fire alarm system graphic workstation module 400 arranged in the remote shutdown station 10. The automatic fire alarm system graphic workstation module 400 is used to meet the requirements of fire monitoring and present the fire information in the form of pictures and texts, so that the operator can judge intuitively.

Referring to Fig. 2, the remote shutdown station system of a nuclear power plant further includes an emergency shutdown module 300 arranged in the remote shutdown station 10. The emergency shutdown module 300 is connected to the on-site reactor shutdown breaker of the nuclear power plant, and is used for carrying out emergency shutdown in an emergency, thereby improving the operation safety of the nuclear power plant. The emergency shutdown module 300 can be a button. When the button is pressed, the shutdown breaker is disconnected to realize emergency shutdown.

The remote shutdown station system also includes a first door 510 and a second door 520 for enabling authorized operators to enter the remote shutdown station 10. The first door 510 is set close to the automatic fire alarm system graphic workstation module 400. The second door 520 is set on the side close to the operator workstation module 100. The first door 510 and the second door 520 are arranged opposite to each other, so as to meet the requirements of evacuation, as well as avoid the problem of affecting evacuation and access to the remote shutdown station when the only door in the room cannot be opened due to failure, especially to meet the requirements of emergency evacuation of the remote shutdown station when the main control room is not habitable. The safety of the remote shutdown station system is improved by setting two doors. Specifically, the first door 510 and the second door 520 are respectively provided with a first access control unit 610 and a second access control unit 620 to prevent unauthorized personnel from entering the remote shutdown station 10. When the first access control unit 610 and the second access control unit 620 lose power, the first access control unit 610 and the second access control unit 620 fail, and the operator can directly enter the remote shutdown station 10 without authorization, so as to avoid the situation that the remote shutdown station 10 cannot be entered due to the power failure, and further improve the safety of the remote shutdown station system.

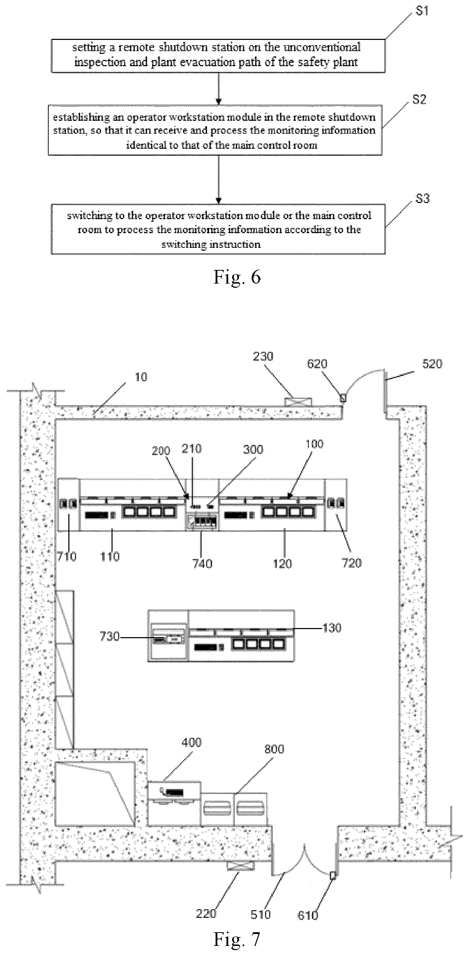

In the embodiment shown in Fig. 2, the third switching unit 230 is arranged outside the door of the main control room on the upper floor. According to other embodiment of the present invention, as shown in Fig. 7, the third switching unit 230 may also be arranged on the wall outside the second door 520. The third switching unit 230 and the second switching unit 220 disposed on the wall outside of the first door 510 are located in different fire compartments. In this manner, 1) the three switching units are located in different fire compartments, which can prevent the loss of the three switching units at the same time due to fire and other reasons, effectively reduce the probability of common-cause failure of the switches; 2) The three switching units are relatively concentrated, it is convenient to perform the switching operation of the switching switch in the emergency situation that the main control room is lost and the remote shutdown station is put into use.

The remote shutdown station system further includes a first communication device 710 , a second communication device 720 , a third communication device 730 and a fourth communication device 740 arranged in the remote shutdown station 10. The first communication device 710 and the third communication devices 730 are respectively arranged on the left side of the first operator workstation 110 and the crew chief workstation 130, the second communication device 720 is arranged on the right side of the second operator workstation 120, the fourth communication device 740 is arranged between the first operator workstation 110 and the second operator workstation 120, so that the operator can communicate with the outside world. The first communication device 710, the second communication device 720, the third communication device 730, and the fourth communication device 740 may be devices such as a telephone, a cable broadcasting console and a dispatching station.

The remote shutdown station system further includes a printer module 800 arranged in the remote shutdown station 10. The printer module 800 is connected to the operator workstation module 110, and is used to print the monitoring information in the operator workstation module 110, to save the monitoring information for subsequent analysis.

It should be noted that the environment of the remote shutdown system in the embodiment of the present invention satisfies the following conditions. The background noise does not exceed 65dB. Under normal lighting conditions, the average illuminance is no less than 300Lux. Under the condition of a single-row normal lighting failure, the illuminance of the core operation area is no less than 200Lux. The cable entry manner of all equipments in the remote shutdown station is the bottom cable entry manner, which effectively improves the aesthetics and comfort of the room. The environment of the above-mentioned remote shutdown system meets the requirements of human factors, provides a good operation and maintenance environment for operators, and effectively reduces the probability of human failure.

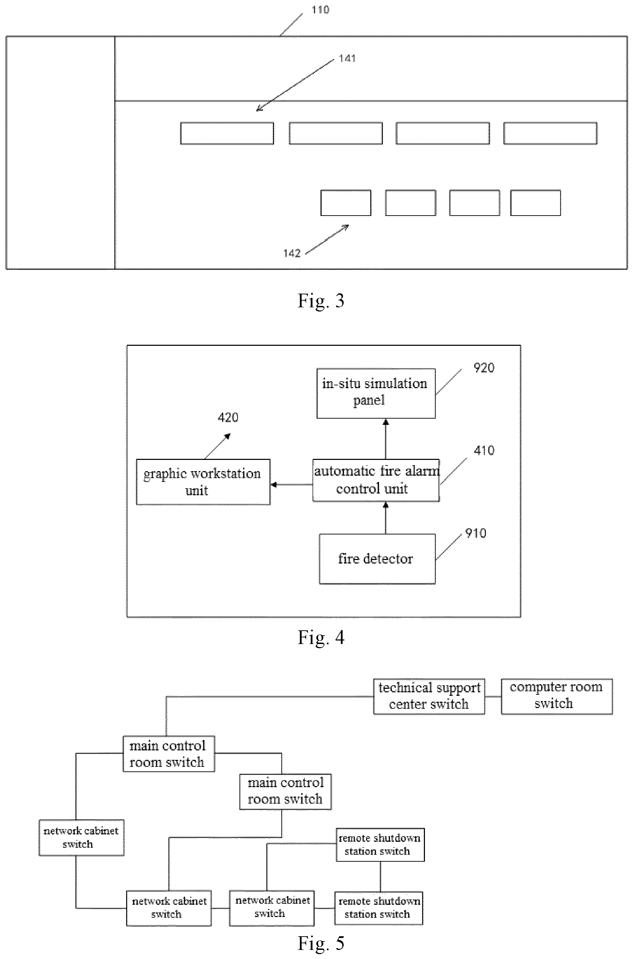

Referring to Fig. 3, taking the first operator workstation 110 as an example, the first operator workstation 110 includes four widescreen monitors 141 and four safety-level operation terminals 142. The four widescreen monitors 141 are used to receive and display monitoring information, and transmit the safety-level monitoring information in the monitoring information to the four safety-level operating terminals 142. The four safety-level operating terminals 142 are used to receive and process the safety-level monitoring information. The four widescreen monitors 141 and the four safety-level operating terminals 142 have a man-machine interface identical to that of the operator workstation in the main control room, which improves the adaptability and human-related performance of the man-machine interface and reduces the probability of human-related failure. It should be noted that: four safety-level operation terminals 142 are placed horizontally and obliquely on the horizontal desktop of each workstation, and the inclination angle meets the requirements of human factors engineering, wherein the four widescreen monitors 141 are function-level 3 items (F-SC3), and the four safety-level operating terminals 142 are function-level 1 items (F-SC1). It should be understood that, the second operator workstation 120 and the crew chief workstation 130 also have the above mentioned structures.

Referring to Fig. 4, the automatic fire alarm system graphic workstation module 400 includes an automatic fire alarm control unit 410 and a graphic workstation unit 420. The input end of the automatic fire alarm control unit 410 is connected to the fire detectors 910 arranged at various positions in the nuclear power plant, for receiving the fire information monitored by the fire detector 910. The fire information includes the information of the room where the fire occurred and other fire information. The output end of the automatic fire alarm control unit 410 is connected to the graphic workstation unit 420 and the in-situ simulation panel 920 respectively, to transmit the fire information to the graphic workstation unit 420 for display in graphic form, so that the operator can understand the fire situation, and to transmit the fire information to the in-situ simulation panel 920 synchronously, The in-situ simulation panel 920 is used to send out sound and light alarm information, to indicate and maintain the information of the room where the fire occurred, and to remind the operator, so as to know the fire situation in time and monitor the development of the fire. The automatic fire alarm system graphic workstation module 400 is of great significance to the effective monitoring of the fire in the power plant under the condition that the main control room is not habitable due to the earthquake and is evacuated to the remote shutdown system.

Referring to Fig. 5, remote shutdown station system has a cable path independent from that of the main control room. As shown in Fig. 3, one of the networks includes three network cabinet switches, two remote shutdown station switches, two main control room switches, one technical support center switch and one computer room switch. The two remote shutdown station switches and one computer room switch form a ring. Two main control room switches and two network cabinet switches form a ring. One of the main control room switches is connected to the computer room switch through the technical support center switch. It can be seen from Fig. 5 that the remote shutdown station switch is not directly connected with the main control room switch, which ensures that the cable path of the remote shutdown station system is independent from that of main control room, to meet the requirements of regulations and standards, and further improve the safety of nuclear power plant operation.

### Second Embodiment

Referring to Fig. 6, the present invention also provides a method for setting up a remote shutdown station of a nuclear power plant including the steps of:
Step S1, setting a remote shutdown station 10 on the unconventional inspection and plant evacuation path of the safety plant, and ensuring the safe operation of the remote shutdown station system of the nuclear power plant;
Step S2, establishing an operator workstation module 100 in the remote shutdown station 10, so that it can receive and process the monitoring information identical to that of the main control room; enhancing the monitoring function and monitoring range of the remote shutdown station system of the nuclear power plant, reducing the dependence on in-situ operation, and solving the problem that some process system logic has to be forced to be automatic when switching to the remote shutdown station system due to limited monitoring means;
Step S3, switching to the operator workstation module 100 or the main control room to process the monitoring information according to the switching instruction. The switching instruction is controlled by three switching units and a logic control cabinet. When at least two switching units issue an instruction to switch to the operator workstation module 100, switching to the operator workstation module 100 to receive and process the monitoring information; When at least two switching units issue an instruction to switch to the main control room, switching to the man-machine interface of the main control room to receive and process the monitoring information. It should be noted that, when at least two switching units issue an instruction to switch to the main control room, switching to the main control room for receiving and processing the monitoring information. When at least two switching units issue an instruction to switch to the operator workstation module 100, the control command of the main control room is automatically blocked, and the monitoring information cannot be processed. The main control room operator workstation is in browse mode automatically, operation authorization cannot be used to log in and then execute the control function, effectively reducing the probability of the main control room issuing false orders during the non-habitability period, thereby affecting the safety of the power plant. However, it should be noted that, when the control command of the main control room is automatically locked, the shutdown button in the main control room can work normally, which is used for reactor shutdown and unit shutdown in emergency situations, ensuring that the main control room can still be used for reactor shutting down and unit shutting down immediately in case of emergency, thereby ensuring the safety of nuclear power plant operation.

### Third Embodiment

The present invention also provides a method for putting a remote shutdown station system of a nuclear power plant into use including the steps of:
1) quickly pressing an emergency shutdown button and a unit shutdown button in a main control room when the main control room is not habitable in abnormal state of the nuclear power plant, to keep the unit in a relatively safe state;
2) operators of the main control room evacuating the main control room to a remote shutdown station, switching switching unit assemblies to a remote shutdown station mode in an evacuation path and the remote shutdown station, and blocking DCS signal of the main control room, to reduce the probability of the main control room issuing false orders during the non-habitability period and further affecting the safety of the power plant;
3) in the remote shutdown station 10, operators loging in to a first operator workstation 110 and a second operator workstation 120 with operator authority, loging in to a crew chief workstation 130 with crew chief authority, and switching safety-level operation terminals 142 of the first operator workstation 110 and the second operator workstation 120 to operation mode through switch thereof; and
4) Using the workstation to perform power plant monitoring and control functions, to make the units retreat and stabilize in refueling cold shutdown state.

Preferably, the switching unit assemblies include a first switching unit 210, a second switching unit 220 and a third switching unit 230, the first switching unit 210 is arranged in the remote shutdown station 10, and the second switching unit 220 and the third switching unit 230 are arranged outside the remote shutdown station 10 respectively;

In step 2), it is only necessary to switch at least two of the three switching units to the remote shutdown station mode, to block the DCS signal of the main control room.

Preferably, the remote shutdown station system includes a first door 510 and a second door 520 opposite to each other, the second switching unit 220 is arranged on a wall outside the first door 510, and the third switching unit 230 is set on a wall outside the second door 520.

In summary, the present invention provides a remote shutdown station system of nuclear power plant and method for putting same into use which adopts digital control system technology and equipment. The remote shutdown station system receives and processes the monitoring information identical to that of the operator workstation in the main control room, which enhances the monitoring function and monitoring range of the remote shutdown station, reduces the dependence on in-situ operation, solves the problem that some process system logic has to be forced to be automatic when switching to the remote shutdown station system due to limited monitoring means is solved. The crew chief workstation has been introduced to meet the requirements of the operational organization and maintenance mode. The crew chief workstation is located behind the operator workstation, and the crew chief can control the monitoring situation of the power plant. A hardware shutdown module is designed in the remote shutdown station system, which can perform the rapid reactor shutdown function. The three switching units are placed in different areas, which can effectively reduce the probability of common-cause failure of the switching switch. An access control is designed in the remote shutdown station system, which effectively prevents unauthorized personnel from entering the remote shutdown station and affects the safety of the remote shutdown station and the nuclear power plant. The access control adopts the design scheme that the access control is invalid in the case of power failure, to avoid the situation of being unable to enter the remote shutdown station due to power failure. The present invention designs communication units to provide means and functions for communicating with the outside. The present invention also provides an automatic fire alarm system graphic workstation to meet the fire monitoring requirements. The present invention also designs that the main control room is automatically locked when the switching command is executed, which effectively reduces the probability of the main control room sending out false commands during the period of non-habitability, thereby affecting the safety of the power plant. The equipment cables in the remote shutdown station system adopt the manner of bottom entry, which effectively improves the aesthetics and comfort of the room. The cable path of the remote shutdown station is relatively independent from the cable path of the main control room, which meets the requirements of regulations and standards and further improves the safety of nuclear power plant operation.

The above described embodiments are only preferred embodiments of the present invention, and are not intended to limit the scope of the present invention. Any modification, equivalent replacement and improvement within the spirit and principle of the present invention should be included in the protection scope of the present invention.

## Claims

1. A remote shutdown station system of a nuclear power plant, **characterized in that** the remote shutdown station system of a nuclear power plant comprises: a remote shutdown station (10) arranged on an unconventional inspection and evacuation path of a safety workshop, an operator workstation module (100) arranged inside the remote shutdown station (10), and a switching unit assembly (200) arranged inside and outside the remote shutdown station (10);
wherein the operator workstation module (100) is connected to a DCS monitoring network of the nuclear power plant and used for receiving and processing, when a main control room is not habitable, monitoring information identical to that of the main control room;
the switching unit assembly (200) is connected to a logic control cabinet and is configured for sending switching instructions to the logic control cabinet according to different states of the nuclear power plant, the logic control cabinet is in communication connection with the main control room and the operator workstation module (100) and is configured for receiving the switching instructions, performing logical processing on the switching instructions, and switching to the main control room or the operator workstation module (100) to receive and process monitoring information in the DCS monitoring network of the nuclear power plant.

2. The remote shutdown station system of a nuclear power plant according to claim 1, **characterized in that** the switching unit assembly (200) comprises a first switching unit (210), a second switching unit (220) and a third switching unit (230), wherein the first switching unit (210), the second switching unit (220) and the third switching unit (230) are connected with the logic control cabinet, and the logic control cabinet is used for:
switching to the operator workstation module (100) to receive and process the monitoring information when the nuclear power plant is in an abnormal state, the main control room is not habitable, and at least two switching units send out instructions to switch to the operator workstation module (100), and
the main control room is automatically locked;
switching to the main control room to receive and process monitoring information, when the nuclear power plant is in normal state and at least two switching units send out an instruction to switch to the main control room, and the operator workstation module (100) is automatically locked.

3. The remote shutdown station system of a nuclear power plant according to claim 2, **characterized in that** the first switching unit (210) is arranged inside the remote shutdown station (10), the second switching unit (220) is arranged outside the remote shutdown station (10), and the third switching unit (230) is arranged outside the main control room, to prevent the three switching units (210, 220, 230) from failing simultaneously due to an accident in a same area.

4. The remote shutdown station system of a nuclear power plant according to claim 1, **characterized in that** the operator workstation module (100) comprises a first operator workstation (110), a second operator workstation (120) and a crew chief workstation (130), and the crew chief workstation (130) is used for receiving the monitoring information identical to that of the operator workstation in the main control room, and monitoring the monitoring information; the crew chief workstation (130) can also be used to authorize the first operator workstation (110) and the second operator workstation (120); the first operator workstation (110) and the second operator workstation (120) are used for receiving monitoring information identical to that of the main control room operator workstation and processing part of the monitoring information, and processing all the monitoring information after authorization from the crew chief workstation (130).

5. The remote shutdown station system of a nuclear power plant according to claim 4, **characterized in that** the first operator workstation (110), the second operator workstation (120) and the crew chief workstation (130) each comprises four widescreen displays (141) and four safety-level operation terminals (142), the four widescreen displays (141) are used for receiving and displaying the monitoring information, and transmitting safety-level monitoring information in the monitoring information to the four safety-level operation terminals (142), the four safety-level operation terminals (142) are used for receiving and processing the safety-level monitoring information, and the four widescreen displays (141) and the four safety-level operation terminal (142) each has a man-machine interface identical to that of the operator workstation in the main control room.

6. The remote shutdown station system of a nuclear power plant according to any one of claims 1 to 5, **characterized in that** the remote shutdown station system further comprises an automatic fire alarm system graphic workstation module (400) arranged inside the remote shutdown station (10), the automatic fire alarm system graphic workstation module (400) comprises an automatic fire alarm control unit (410) and a graphic workstation unit (420), and an input end of the automatic fire alarm control unit (410) is connected to fire detectors (910) arranged at various positions in the nuclear power plant for receiving fire information monitored by the fire detectors (910); an output end of the automatic fire alarm control unit (410) is respectively connected with the graphic workstation unit (420) and in-situ simulation panels (920) set up at various places in the nuclear power plant, to transmit the fire information to the graphic workstation unit (420) and display the fire information in graphic form for the operator to understand the fire situation, and to transmit the fire information to the in-situ simulation panels (920) synchronously, so that the in-situ simulation panels (920) can issue sound and light alarm information to alert the operator.

7. The remote shutdown station system of a nuclear power plant according to claim 6, **characterized in that** the remote shutdown station (10) further comprises a first door (510) and a second door (520) for allowing authorized operators to enter the remote shutdown station (10), the first door (510) is arranged on the side close to the automatic fire alarm system graphic workstation module (400), and the second door (520) is arranged on the side close to the operator workstation module (100) to improve safety of the remote shutdown station (10).

8. The remote shutdown station system of a nuclear power plant according to any one of claims 4 to 5, **characterized in that** the remote shutdown station system further comprises a first communication device (710), a second communication device (720), a third communication device (730) and a fourth communication device (740) arranged inside the remote shutdown station (10), the first communication device (710) and the third communication device (730) are arranged on the left side of the first operator workstation (110) and the crew chief workstation (130) respectively, the second communication device (720) is arranged on the right side of the second operator workstation (120), and the fourth communication device (740) is arranged between the first operator workstation (110) and the second operator workstation (120) for the operator to communicate with the outside.

9. The remote shutdown station system of a nuclear power plant according to any one of claims 1 to 5, **characterized in that** the remote shutdown station system further comprises a printer module (800) arranged inside the remote shutdown station (10), and the printer module (800) is connected to the operator workstation module (100) to print the monitoring information in the operator workstation module (100).

10. The remote shutdown station system of a nuclear power plant according to any one of claims 1 to 5, **characterized in that** the remote shutdown station system further comprises an emergency shutdown module (300) arranged inside the remote shutdown station (10), the emergency shutdown module (300) is connected to a shutdown breaker for emergency shutdown.

11. The remote shutdown station system of a nuclear power plant according to any one of claims 1 to 5, **characterized in that** the remote shutdown station system has a cable path independent from that of the main control room.

12. The remote shutdown station system of a nuclear power plant according to any one of claims 1 to 5, **characterized in that** a background noise of the remote shutdown station (10) does not exceed 65dB;
under normal lighting conditions, an average illuminance of the remote shutdown station (10) is no less than 300Lux; under single-row normal lighting failure condition, illuminance of a core operation area is no less than 200Lux; and
cable entry manner of equipment inside the remote shutdown station (10) is bottom cable entry, to improve aesthetics and comfort of the remote shutdown station (10).

13. A method for putting a remote shutdown station system of a nuclear power plant into use, **characterized in that**, the method comprises the steps of:
1) quickly pressing an emergency shutdown button and a unit shutdown button in a main control room when the main control room is not habitable in abnormal state of the nuclear power plant, to keep the unit in a relatively safe state;
2) operators of the main control room evacuating the main control room to a remote shutdown station (10), switching a switching unit assembly (200) to a remote shutdown station mode in an evacuation path and the remote shutdown station (10), and blocking DCS signal of the main control room;
3) in the remote shutdown station (10), operators logging in to a first operator workstation (110) and a second operator workstation (120) with operator authority, logging in to a crew chief workstation (130) with crew chief authority, and switching safety-level operation terminals (142) of the first operator workstation (110) and the second operator workstation (120) to operation mode through switch thereof; and
4) using the workstation to perform power plant monitoring and control functions, to make the units retreat and stabilize in refueling cold shutdown state.

14. The method for putting a remote shutdown station system of a nuclear power plant into use according to claim 13, **characterized in that** the switching unit assembly (200) comprise a first switching unit (210), a second switching unit (220) and a third switching unit (230), the first switching unit (210) is arranged inside the remote shutdown station (10), and the second switching unit (220) and the third switching unit (230) are arranged outside the remote shutdown station (10) respectively; and
in step 2), at least two of the three switching units (210,220,230) are switched to the remote shutdown station mode to block the DCS signal of the main control room.

15. The method for putting a remote shutdown station system of a nuclear power plant into use according to claim 14, **characterized in that** the remote shutdown station system comprises a first door (510) and a second door (520) opposite to each other, the second switching unit (220) is arranged on a wall outside the first door (510), and the third switching unit (230) is set on a wall outside the second door (520).
